# EUROPEAN PATENT APPLICATION

(11) **EP 2 545 999 A1**
(43) Date of publication of application: **16.01.2013**
(21) Application number: 12174562.4
(22) Date of filing: 02.07.2012
(51) Int. Cl.: B05B 7/32, B05B 7/24, A01C 23/04, B01F 5/04, B01F 13/00, B01F 3/08, G05D 11/00

(54) **Portable device of safe spraying**

(30) Priority: 13.07.2011 BR 11035994
(71) Applicant: Nishimura, Takashi, 17580-000 São Paulo SP (BR)
(72) Inventor: Nishimura, Takashi, 17580-000 São Paulo SP (BR)
(74) Representative: Curell Suñol S.L.P.

(57) **Abstract**

Portable spraying device comprising a container (1) with a lid (2), said lid (2) having a first vertical hole (4) that communicates with a flexible reservoir (7)containing a chemical product. Said flexible reservoir (7) being provided with a fast coupling (6) to a retention valve (9) of the vertical hole (4). An adjustable flow valve (8) is screwed in a projection of said lid (2) into said hole (4), said valve (8) operating in said hole (4) and also allowing the passage of the fluid through an horizontal hole (10) of the lid (2). The horizontal hole (10) having on one side a spur (11), to which a first hose (12), communicating with a pistol (18), is connected, and on the other side being crossed by a second vertical hole (13) having an inferior tubular extension (14) entering the conatiner (1) and a superior spur (15) to which a second hose (16) is connected. The second hose (16) being coupled to a source of pressurized water.

## Description

This report is about a patent of invention of an improvement introduced in a portable device of safe spraying, more specifically in a device of agricultural spraying.

As known, agricultural portable sprayers were created to treatment of small harvest, with chemical products that act as fungicide, insecticides, manure and other aims. The user takes with him the equipment, which is made of a tank of diluted product, with compatible weight with transport by user on his back, or sustained by a belt, or suspended by hand. In this tank is attached a manual pump to pressurize the tank, an exit hose and a pistol with a valve of trigger, with a tube that has a sprinkler nozzle at the end.

There are sprayers where the pump pressures the solution in a secondary chamber, with a constant layer of air in the superior part, which is compressed with the admission of the solution and keeps for a while the pistol working until it's necessary to pump again.

The solution of chemical product in water, that feeds the tank, establishes danger to the health of the user, because small eventual spillage or drops during the refill can get in touch with skin. In intensive application, there is the need of frequent refilling, what multiplies the probability of contamination of the user.

It is one of the objectives of this invention to provide an improvement in a portable device of safe spraying that transforms the portable device to a very efficient and productive device, for the intensive treatment of harvest.

Another aim of this invention is to provide an improvement in a portable device of safe spraying that reduces the frequency of refilling of chemical product, keeping the rhythm of application.

Another aim of this invention is to provide an improvement in portable device of safe spraying that promotes a drastic reduction of the operator's fatigue because he won't need to pump manually, because the source of pressurized water is external.

These and other aims and advantages of this invention will be reached with an improvement in the portable device of safe spraying, where this improvement has as reference a previous invention, form this same author, named "Safe portable Sprayer", deposited at INPI in 16 of May, 2011 on protocol number 01819000018. So, the improvement introduced in a portable device of safe spraying is accomplished in a pressured container of water and of chemical product contained in a flexible reservoir with fast coupling which has compatible size and weight with transport by user and with almost total of volume occupied by the reservoir.

The lid of the container has a valve of adjustment of flow of the chemical product, where the container receives clean, pressured water which comes from a settled motor pump, through a long hose, and the motor pump recycles water with a sequential adjustable valve which keeps constant pressure in the hose independently of the flow.

Next, this invention will be described with reference to the Figs. attached, in which:
Fig. 1 represents a general view in elevation of the components of the sprayer, interconnected;
Fig. 2 represents a vertical cut of the pressure container;
Fig. 3 represents the hydraulic scheme of the sprayer;
Fig. 4 illustrates the symbol of the fast coupling connected with retention valve operated mechanically;
Fig. 5 illustrates the symbol of the sequence valve that keeps constant the input pressure.
Fig. 6 illustrates the symbol of the directional valve of two vias, set by trigger, normally closed, and,
Fig. 7 illustrates the variable restriction.

According to these Figs., the improvement introduced in a portable device of safe spraying is constituted by one container 1, with water and chemical product, defined by a carcass in shape of a pan, whose superior opening receives in a screwed and sealed way, one lid 2 that has, placed in the superior part of a projection 3 basically cylindrical, with a vertical hole 4 connected with the inferior face of said lid 2, and still concentric to a vertical projection 5 on which it's screwed the fast coupling 6, of a flexible reservoir 7, which chemical product on its interior and disposed in the interior of container 1.

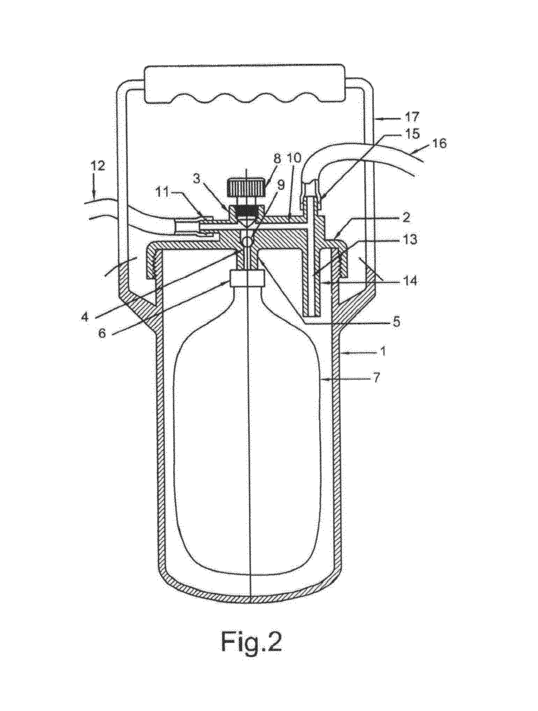

On Fig. 2, the vertical cut of the container 1 set shows a flexible reservoir 7, full of chemical product, and so occupying the bigger part of the interior of this container 1. The full reservoir (7) is, so, little smaller than the container 1. Preferably the reservoir occupies over the 60% of the interior of the container, more preferably over the 75% and most preferably over the 90% of the interior of the container 1. On its superior part, the projection 3 has a thread that screws itself to a shank of a valve 8, whose conical end can obturate the vertical hole 4, in a point over a reduction of diameter of this hole 4, where a sphere 9 works as a valve of retention. Over the reduction and the sphere 9, the hole 4 communicates with a horizontal hole 10, provided with an extreme connection 11 for the fitting in of a hose 12, having its tubular extension 14, whose extreme opposite and superior defines a spur 15, where a hose 16 is connected. The container 1 has a strap 17 to transport by the hand of the user, or pull eyes to fixation of belts to transport it by the shoulder or by the waist.

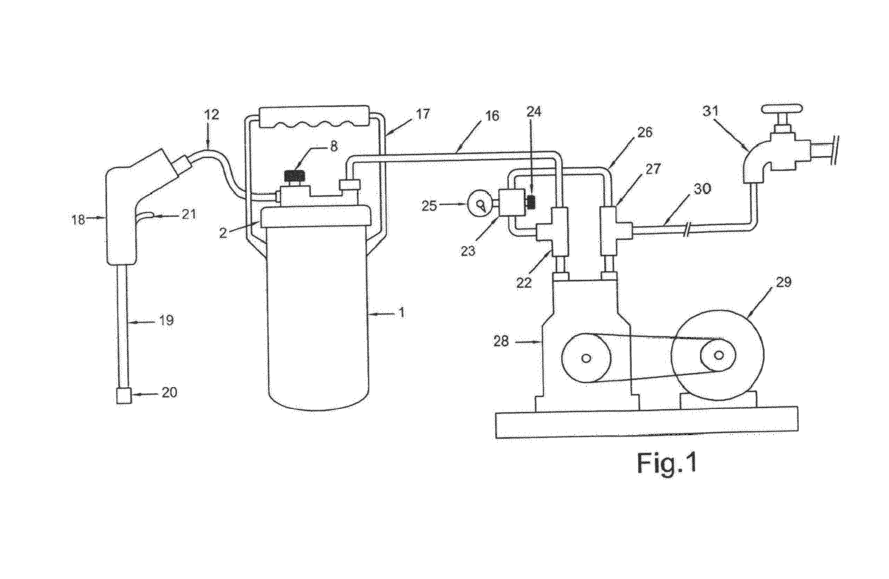

The hose 12 joins to a pistol of spraying 18 (see Fig. 1), that has a tubular lance 19 and a sprinkler nozzle 20, being set by a trigger 21, provided in the pistol's frame 18.

The hose 16 is connected to a "T" connection 22, of a set of improved engine and pump, where this connection 22 has an exit to hose 16 and other to a valve 23 of adjustable sequence, provided with a handle bar 24 of adjust and manometer 25. A tube 26 that extends from the exit of valve 23 communicates to a connection "T" 27, connected to the port of aspiration of a hydraulic pump 28, where connection 22 is connected.

An electrical or combustion engine 29 activates pump 28 directly or by belt, where a connection "T" 27, on its turn, communicates through the hose 30 with a source of clean water, illustrated on Fig. 1 by a tap 31.

Hose 12 is short, because it connects the container 1 to the pistol 18 and both are transported by the user. Hose 16 can be long, with an extension facilitated by a bobbin of hose. The place of use of the equipment also can have many points of capture of pressured clean water, nurtured by connection 22, where it's able to change the connection of the hose 16 to the closest point of work, and also, allowing the connection of many sprayers simultaneously.

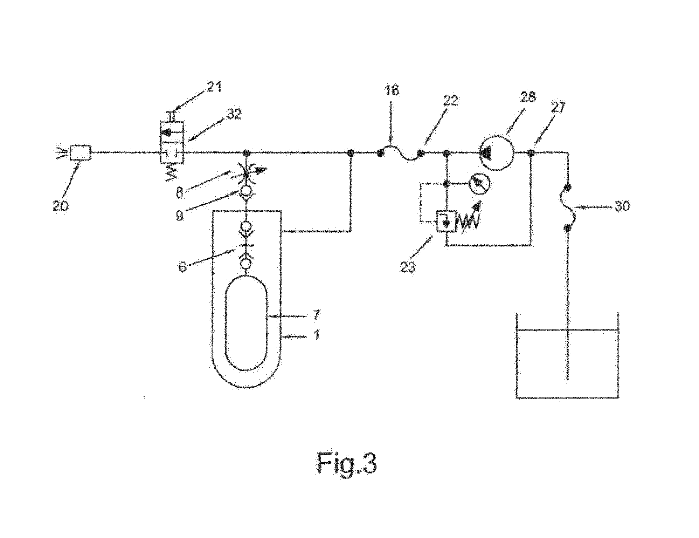

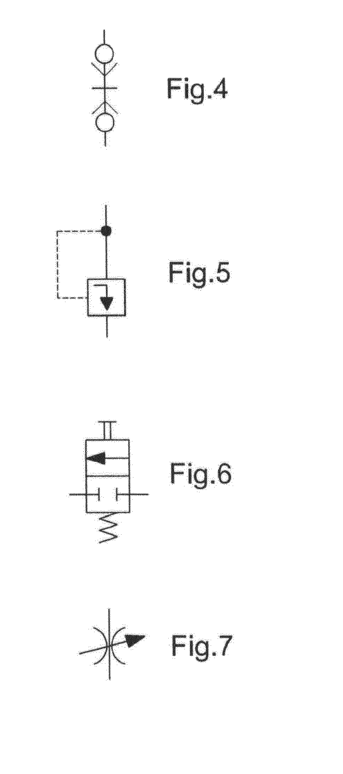

Fig. 3 represents the normalized hydraulic scheme, used in this sprayer and the description of Figs. 4, 5, 6 and 7 simplify the understanding.

Container 1 and fast coupling 6 represented on Figs. 2, 3 and 4 were claimed in the order of patent "Safe portable sprayer", on May 16, 2011, bonded by hereby claimant under protocol number 018119000018.

This coupling, when connected, allows passage of chemical product contained in reservoir 7 to the valve 8 and hole 10, being watertight to the clean water that surrounds it.

When unplugged, both hole 4 of projection 5 and the hole of the reservoir will be closed, impeding the chemical product to contaminate the clean water. This way, it won't have a chance to happen an accident by contamination of the user because of dropping or spilling of the poison.

As it can be seen on Figs. 1 and 2, the user carries with him the pistol 18 and the container 1 with its lid 2, with content almost exclusive of chemical product in the beginning of a working day. To some products, the dilution with water is 1 to 500, up to, or even more than 1 to 1000. In this condition, at each load of the chemical product, the user will spray almost five hundred times, or more, clean water. The external source of clean water is pressurized, and, this way, the user doesn't pump manually the product, eliminating this source of fatigue and increasing considerably the productivity of spraying. The valve 23, of adjustable sequence, keeps the pressure of the clean water, which is provided through hose 16, at a constant level, adjusted by handle bar 24. This valve monitors the pressure in the section of hose 16, by manometer 25, and returns to the port of aspiration of pump 28 any quantity of water that can increase the pressure, through tube 26. The hydraulic pump 28 supplies hose 16 with clean water to the steady pressure, independently of flow, from where it goes to the hole 13, compressing the wrapping of the concentrated chemical product, and expelling it by valve 4, going through hole 10, to the connection 11 of hose 12.

This pressure of container 1 that compresses the reservoir 7, expels its chemical product through the fast coupling 6, that passes through hole 4, and mixes to the water that passes through hole 10. The mixture of water with chemical product goes from hole 10 to the pistol 18, through hose 12, and gets out this pistol 18 through sprinkler nozzle 20, when the directional valve 32, powered by trigger 21 is open, see Fig. 3.

The fast coupling 6 is provided with valves of retention showed on Figs. 3 and 4 and the exit flow of chemical product can be controlled by valve 8, through its handle bar.

If the flow of the sprinkler nozzle is kept, you can effectuate the dosage of chemical product through a value settled of the valve 8. The sphere 9 makes a retention valve that prevents the passage of water on the way of reservoir 7.

Usually the reservoir 7 is provided to the farmer by the manufacturer of the chemical product, returning to the supplier when empty, to refill or eventually to discard, so the danger of handling is not transferred to the farmer.

## Claims

1. PORTABLE DEVICE OF SAFE SPRAYING in which a container (1) of water and chemical product, with a superior lid (2), said lid (2) having a vertical hole (4) that communicates with a flexible reservoir (7) of packaging of chemical product, said reservoir (7) being provided with a fast coupling (6) with a retention valve operated mechanically, having said hole (4), over the lid (2), in a projection of the lid (2), a thread where a adjustable flow valve (8) is screwed, said valve (8) operating on hole (4) giving passage to the fluid to a horizontal hole (10) with spur (11), where a hose (12) is connected, that goes to a pistol (18) provided of trigger valve (21), lance (19) and sprinkler nozzle (20), **characterized by** the fact that the lid (2) has its horizontal hole (10) in communication with a vertical hole (13) that crosses it, with an inferior tubular extension (14) and one superior spur (15), where a hose (16) is connected to a source of pressurized clean water, and, the reservoir (7) has dimensions a little smaller than the internal room of the container (1) and this container has dimension and weight compatible with the transport by a user, and also has a belt (17) to sustain the device by hand, or lugs with belts to sustain the device to the shoulder or waist of the operator.

2. PORTABLE DEVCE OF SAFE SPRAYING, according to claim 1, **characterized by** the fact of including a hydraulic pump (28), activated by an electrical or combustion engine (29) and connected to a hose (16) that sends clean and pressurized water to the lid (2) and to the valve (23), with a handle bar (24) and adjusted by a manometer (25), connected via a "T" tube to the port of aspiration of the tube (28).

3. PORTABLE DEVCE OF SAFE SPRAYING, according to claim 2, **characterized by** the fact that valve (23)keeps the pressure of the clean water, which is supplied through hose (16), at a constant level, adjusted by the handle bar (24); and this valve monitors, by manometer (25), the pressure in the branch of the hose (16), and returns to the port of aspiration of the pump (28) any quantity of water that can elevate pressure, through tube (26).

4. PORTABLE DEVCE OF SAFE SPRAYING, according to claim 1 or 2, **characterized by** the fact that the hose (16) is long and extendable by the pulley of the hose.
